# EUROPEAN PATENT APPLICATION

(11) **EP 4 779 855 A1**
(43) Date of publication of application: **22.07.2026**
(21) Application number: 26151407.9
(22) Date of filing: 12.01.2026
(51) Int. Cl.: H02M 3/158

(54) **SYSTEM AND METHOD OF CONTROL FOR A DC-DC CONVERTER**

(30) Priority: 15.01.2025 US 202519022528
(71) Applicant: NXP USA, Inc., Austin, TX 78735 (US)
(72) Inventor: Pakala, Sri Harsh, 5656AG Eindhoven (NL); Talamo, Salvadore Frederick, 5656AG Eindhoven (NL)
(74) Representative: Krott, Michel

(57) **Abstract**

Systems and methods of controlling buck-boost converters are provided herein that include controllers having two delay line based compensators in series. The two delay line based compensators may include a voltage loop delay line compensator and a current loop delay line compensator. The voltage loop delay line compensator may be the first compensator and the current loop delay line compensator may be the second compensator. Each delay line based compensator may include a pre-condition stage, a pre-condition output-to-pulse conversion stage, a time difference comparison stage, a pulse to current conversion stage, and a current to voltage conversion stage.

## Description

### FIELD OF THE DISCLOSURE

The present disclosure relates to systems and methods for controlling direct current to direct current ("DC-DC") converters, including for example buck converters, boost converters, and buck-boost converters.

### BACKGROUND OF THE DISCLOSURE

There is high demand to extend the battery life of electronic devices, including without limitation portable and hand-held devices, while at the same time achieving greater miniaturization. Buck-boost converters are often used in order to provide high efficiency and to be able to operate across a wide range of load current and input/output voltages.

However, there are trade-offs for known buck-boost converters to be able to accommodate a wide operating range of input/output voltages coupled with the need to achieve high efficiencies (e,g., >90%). For example, examples of known buck-boost converters need to operate at low switching frequencies, such as less than 1MHz, and also require large power components such as power inductors that operate at greater than about 1uH and output capacitors that operate at greater than about 47uF. Control loops to regulate the output voltage for buck-boost converters in such applications require large external compensation networks in order to be stabilized.

For at least one or more of these reasons, or one or more other reasons, it would be advantageous if new or improved systems could be developed, and/or improved methods of operation or implementation could be developed, so as to address any one or more of the concerns discussed above or to address one or more other concerns or provide one or more benefits.

### SUMMARY

The present disclosure relates to systems and methods of controlling DC-DC converters, including for example buck converters, boost converters, and buck-boost converters.

In one example embodiment, a DC-DC converter is provided comprising: a DC-DC converter power stage that includes a plurality of switches and receives an input voltage from a power source, the input voltage having a first voltage value; a plurality of drivers operatively connected to plurality of switches that control opening and closing of the plurality of switches; a controller that is operatively connected to and controls operation of the plurality of drivers to regulate the input voltage through the DC-DC converter power stage and generate an intermediate voltage; and an inductor operatively connected to the DC-DC converter power stage that receives the intermediate voltage and outputs an output voltage, the output voltage having a second voltage value. The controller includes: a first compensator that receives as inputs a first feedback voltage and a reference voltage and generates a first control voltage; a second compensator operatively connected to the first compensation in series, wherein the second compensator receives as inputs the first control voltage from the first compensator and a second feedback voltage and generates a second control voltage; a pulse width modulation comparator that receives as inputs the second control voltage and a sawtooth ramp signal and generates a pulse width modulation signal; and a non-overlap block operatively connected to the pulse width modulation comparator that receives the pulse width modulation signal and generates deadtime and signals to control the plurality of drivers.

In one such example embodiment, the DC-DC converter is a buck-boost converter, and the first compensator and second compensator are each a delay line based compensator.

In one such example embodiment, the first compensator is a voltage loop delay line compensator and the second compensator is a current loop delay line compensator.

In one such example embodiment, each of the delay line based compensators includes: a pre-condition stage that receives as inputs a feedback voltage and a comparison voltage and generates as outputs a positive output voltage error and a negative output voltage error; a pre-condition output-to-pulse conversion stage operatively connected to the pre-condition stage, wherein the pre-condition output-to-pulse conversion stage includes a dedicated reference clock, a first delay line and a second delay line, and generates a first time signal from the first delay line based on the positive output voltage error and a first clock signal from the dedicated reference clock, and a second time signal from the second delay line based on the negative output voltage error and a second clock signal from the dedicated reference clock; a time difference comparison stage operatively connected to the pre-condition output-to-pulse conversion stage, wherein the time difference comparison stage receives as inputs the first time signal and the second time signal, and generates a phase difference signal; a pulse to current conversion stage operatively connected to the time difference comparison stage, wherein the pulse to current conversion stage receives as an input the phase difference signal and generates a control current as an output; and a current to voltage conversion stage operatively connected to the pulse to current conversion stage, wherein the current to voltage conversion stage receives as an input the control current and generates a control voltage as an output.

In one such example embodiment, the pre-condition stage is a trans conductor.

In one such example embodiment, the time difference comparison stage is a phase frequency detector.

In one such example embodiment, the pulse to current conversion stage is a charge pump.

In one such example embodiment, the current to voltage conversion stage is a loop filter.

In a second example embodiment, a control system for a buck-boost converter is provided, where the control system comprises: a first compensator that receives as inputs a first feedback voltage and a reference voltage and generates a first control voltage; a second compensator operatively connected to the first compensation in series, wherein the second compensator receives as inputs the first control voltage from the first compensator and a second feedback voltage and generates a second control voltage; a pulse width modulation comparator that receives as inputs the second control voltage and a sawtooth ramp signal and generates a pulse width modulation signal; and a non-overlap block operatively connected to the pulse width modulation comparator that receives the pulse width modulation signal and generates deadtime and signals to control a plurality of drivers.

In one such example embodiment, the first compensator and second compensator are each a delay line based compensator.

In one such example embodiment, the first compensator is a voltage loop delay line compensator and the second compensator is a current loop delay line compensator.

In one such example embodiment, each of the delay line based compensators includes: a pre-condition stage that receives as inputs a feedback voltage and a comparison voltage and generates as outputs a positive output voltage error and a negative output voltage error; a pre-condition output-to-pulse conversion stage operatively connected to the pre-condition stage, wherein the pre-condition output-to-pulse conversion stage includes a dedicated reference clock, a first delay line and a second delay line, and generates a first time signal from the first delay line based on the positive output voltage error and a first clock signal from the dedicated reference clock, and a second time signal from the second delay line based on the negative output voltage error and a second clock signal from the dedicated reference clock; a time difference comparison stage operatively connected to the pre-condition output-to-pulse conversion stage, wherein the time difference comparison stage receives as inputs the first time signal and the second time signal, and generates a phase difference signal; a pulse to current conversion stage operatively connected to the time difference comparison stage, wherein the pulse to current conversion stage receives as an input the phase difference signal and generates a control current as an output; and a current to voltage conversion stage operatively connected to the pulse to current conversion stage, wherein the current to voltage conversion stage receives as an input the control current and generates a control voltage as an output.

In one such example embodiment, the pre-condition stage is a trans conductor.

In one such example embodiment, the time difference comparison stage is a phase frequency detector.

In one such example embodiment, the pulse to current conversion stage is a charge pump.

In one such example embodiment, the current to voltage conversion stage is a loop filter.

In one such example embodiment, the pre-condition stage is a trans conductor, the time difference comparison stage is a phase frequency detector, the pulse to current conversion stage is a charge pump, and the current to voltage conversion stage is a loop filter.

In a third example embodiment, a method of controlling a buck-boost converter is provided, where the method comprises: receiving by a DC-DC converter power stage an input voltage from a power source, the input voltage having a first voltage value; operating a controller to regulate the input voltage through the DC-DC converter power stage by controlling a plurality of drivers to generate an intermediate voltage; passing the intermediate voltage from the DC-DC converter power stage to an inductor; and outputting an output voltage at a second voltage value from the inductor. Operating the controller includes: generating a first control voltage as an output of a first compensator, wherein the first compensator receives as inputs a first feedback voltage and a reference voltage; generating a second control voltage as an output of a second compensator, the second compensator being operatively connected to the first compensator in series, wherein the second compensator receives as inputs the first control voltage and a second feedback voltage; and generating a pulse width modulation signal as an output of a pulse width modulation comparator, the pulse width modulation comparator being operatively connected to the second compensator, wherein the pulse width modulation comparator receives as inputs the second control voltage and a sawtooth ramp signal.

In one such example embodiment, generating a first control voltage as an output of a first compensator includes: receiving by a pre-condition stage of inputs including a feedback voltage and a comparison voltage, and generating by the pre-condition stage a positive output voltage error and a negative output voltage error as outputs; receiving as inputs the positive output voltage error and the negative output voltage error by a pre-condition output-to-pulse conversion stage operatively connected to the pre-condition stage, wherein the pre-condition output-to-pulse conversion stage includes a first delay line, a second delay line, and a dedicated reference clock, and generating by the pre-condition output-to-pulse conversion stage a first time signal from the first delay line based on the positive output voltage error and a first clock signal from the dedicated reference clock, and a second time signal from the second delay line based on the negative output voltage error and a second clock signal from the dedicated reference clock; receiving as inputs, by a time difference comparison stage operatively connected to the pre-condition output-to-pulse conversion stage, the first time signal and the second time signal, and generating by the time difference comparison stage a phase difference signal; receiving as an input the phase difference signal by a pulse to current conversion stage operatively connected to the time difference comparison stage, and generating by the pulse to current conversion stage a control current as an output; and receiving the control current as an input by a current to voltage conversion stage operatively connected to the pulse to current conversion stage, and generating by the current to voltage conversion stage a control voltage as an output.

In one such example embodiment, generating a second control voltage as an output of a second compensator includes: receiving by a pre-condition stage of inputs including a feedback voltage and a comparison voltage, and generating by the pre-condition stage a positive output voltage error and a negative output voltage error as outputs; receiving as inputs the positive output voltage error and the negative output voltage error by a pre-condition output-to-pulse conversion stage operatively connected to the pre-condition stage, wherein the pre-condition output-to-pulse conversion stage includes a first delay line, a second delay line, and a dedicated reference clock, and generating by the pre-condition output-to-pulse conversion stage a first time signal from the first delay line based on the positive output voltage error and a first clock signal from the dedicated reference clock, and a second time signal from the second delay line based on the negative output voltage error and a second clock signal from the dedicated reference clock; receiving as inputs, by a time difference comparison stage operatively connected to the pre-condition output-to-pulse conversion stage, the first time signal and the second time signal, and generating by the time difference comparison stage a phase difference signal; receiving as an input the phase difference signal by a pulse to current conversion stage operatively connected to the time difference comparison stage, and generating by the pulse to current conversion stage a control current as an output; and receiving the control current as an input by a current to voltage conversion stage operatively connected to the pulse to current conversion stage, and generating by the current to voltage conversion stage a control voltage as an output.

### BRIEF DESCRIPTION OF THE DRAWINGS

Specific examples have been chosen for purposes of illustration and description, and are shown in the accompanying drawings, forming a part of the specification.
Figure 1 is an example embodiment of a block diagram of one buck-boost converter of the present technology that includes a controller of the present technology.
Figure 2 is an example embodiment of a block diagram of another buck-boost converter of the present technology that includes a controller of the present technology.
Figure 3 is an example embodiment of a block diagram of the stages of a delay line based compensator of the present technology.
Figure 4 is an example embodiment of a flow diagram of one example of a method of controlling a buck-boost converter of the present technology.

While various embodiments discussed herein are amenable to modifications and alternative forms, aspects thereof have been shown by way of example in the drawings and are described in detail herein. It should be understood, however, that the disclosure is not limited to the particular embodiments described, and instead is meant to include all modifications, equivalents, and alternatives falling within the scope of the disclosure. In addition, the terms "example" and "embodiment" as used throughout this application is only by way of illustration, and not limitation, the Figures are not necessarily drawn to scale, and the use of the same reference symbols in different drawings indicates similar or identical items unless otherwise noted. The term "configured to" as used herein with respect to a component being "configured to" have certain structural characteristics in specified circumstances or to perform a specified function means that the component is structurally formed such that the component meets the structural characteristics in the specified circumstances or performs the function without further modification. The term "operatively connected" herein means that the two components electrically connected, whether directly or indirectly, in such a way that the disclosed signals are passed at least from one of the components to the other. The term "about" as used herein with reference to any measurement or physical characteristic means approximately, and includes the stated measurement or physical characteristic plus or minus an amount that is within an acceptable margin of error or other amount of variance that maintains the desired functionality.

### DETAILED DESCRIPTION

The present technology relates to systems and methods of controlling DC-DC converters, including for example buck converters, boost converters, and buck-boost converters. Accordingly, as used herein, the term "buck-boost converter" should be understood to encompass any buck converter, boost converter, and/or buck-boost converter. It should also be understood that the systems and methods described herein may be applicable to any type of DC-DC converter. The systems and methods described herein may provide fully integrated on chip compensation networks for buck-boost converters, and may eliminate the need for external compensation networks to stabilize the buck-boost converter control loop. Additionally, examples of known controllers for buck-boost converts often include and use a voltage control oscillator. Systems and methods of the present technology do not include or require use of a voltage control oscillator.

Systems and methods of controlling buck-boost converters of the present technology generally include use of two compensators in series to compensate the control loops in a buck-boost converter. The two compensators are both delay line compensators. One of the compensators may be a voltage loop delay line compensator and the other compensator may be a current loop delay line compensator. In examples using a voltage loop delay line and a current loop delay line in series, the voltage loop delay line may be considered to be an outer loop compensator and the current loop delay line may be considered to be an inner loop compensator.

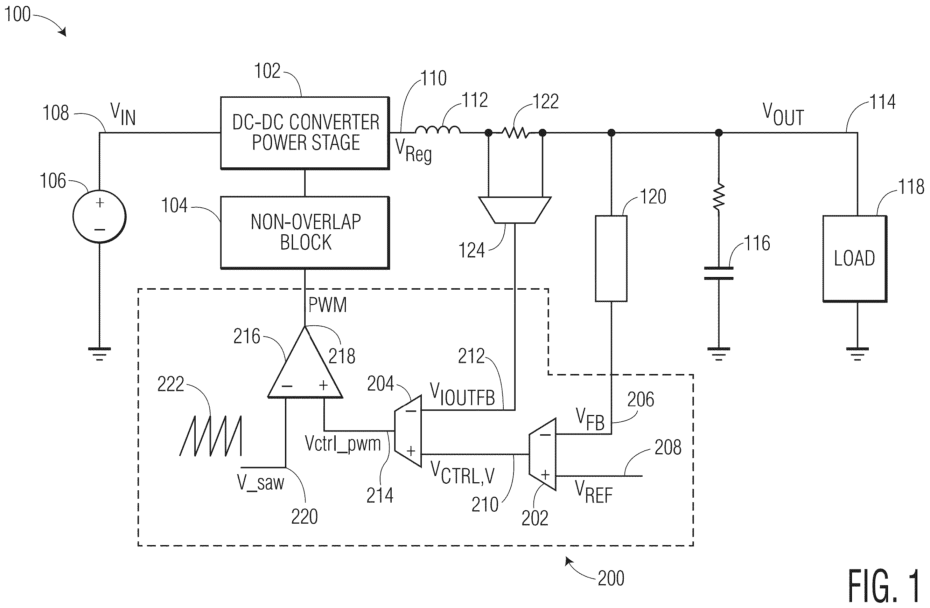

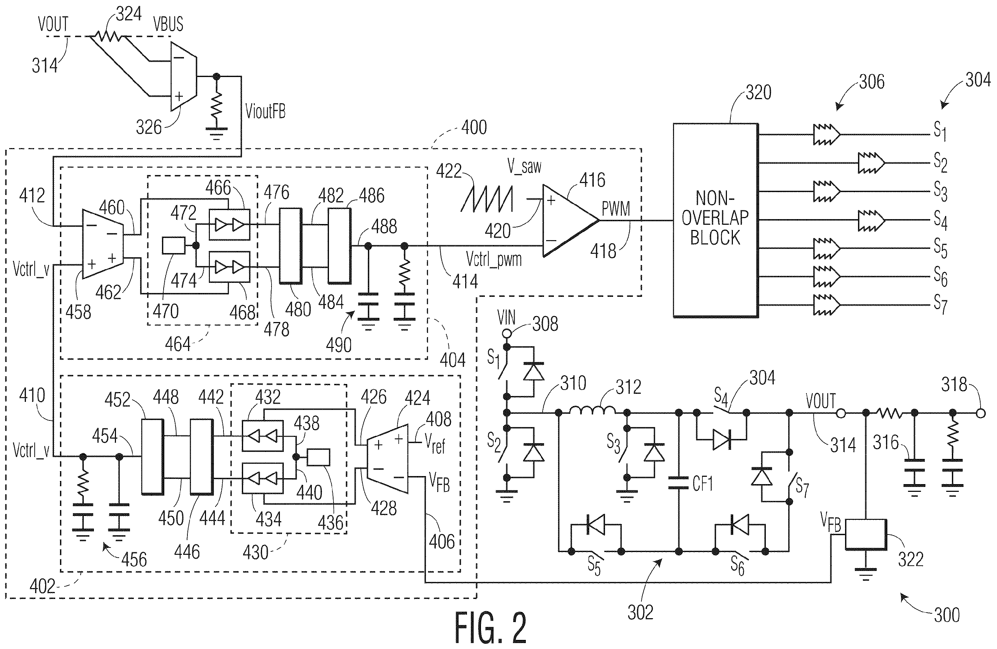

Figure 1 is a block diagram of one example of a DC-DC converter, which is shown as being a buck-boost converter 100, of the present technology that includes a controller 200 of the present technology. The buck-boost converter 100 includes a DC-DC converter power stage 102, which includes a plurality of switches (304 in Figure 2), as well as a non-overlap block 104 that includes a plurality of drivers (306 in Figure 2). As shown in Figure 2, the buck-boost converter has a seven switch topology. In an alternate embodiment, a four switch or six switch topology could be used. The plurality of drivers are operatively connected to the plurality of switches and control the opening and closing of the plurality of switches. The non-overlap block 104, and thus also the plurality of drivers, are operatively connected to the DC-DC converter power stage 102. The controller 200 is operatively connected to the non-overlap block 104 and controls operation of the plurality of drivers. The DC-DC converter power stage 102 is operatively connected to and receives an input voltage (V_{IN}) 108 from a power source 106. The input voltage has a first voltage value. The input voltage 108 is regulated through the DC-DC converter power stage 102 by the controller 200 controlling the plurality of drivers to generate an intermediate voltage (V_{Reg}) 110. The buck-boost converter 100 also includes an inductor 112 that is operatively connected to the DC-DC converter power stage 102. The intermediate voltage 110 is passed to the inductor 112 from the DC-DC converter power stage 102. The inductor 112 receives the intermediate voltage 110. The regulation by the controller 200 results in increasing or decreasing the input voltage 108 to generate a desired output voltage (Vₒᵤₜ) 114 having a second voltage value at a voltage output node. The second voltage value of the output voltage 114 may be higher or lower than the first voltage value of the input voltage 108, depending upon the application. A load 118 is operatively connected to the voltage output node at which the output voltage 114 is provided, and the output voltage 114 is ultimately passed to the load 118. However, the buck-boost converter may also include a capacitor 116 operatively connected to the inductor 112, and the output voltage 114 may be stored in the capacitor 116 prior to being passed to the load 118.

The controller 200 includes two compensators in series, first compensator 202 and a second compensator 204. Each of the compensators is a delay line based compensator. In at least some examples, and as described in further detail with respect to Figure 2 below, one of the compensators may be a voltage loop delay line compensator and the other compensator may be a current loop delay line compensator. In at least one example, the first compensator 202 is a voltage loop delay line compensator, and the second compensator 204 is a current loop delay line compensator.

The first compensator 202 receives as inputs a first feedback voltage (V_{FB}) 206 and a reference voltage (V_{REF}) 208. The first feedback voltage 206 may be a scaled version of the output voltage 114. As shown in Figure 1, the buck-boost converter 100 may include a voltage divider 120, which may sample the output voltage 114 and generate the first feedback voltage 206. The reference voltage 208 is the same voltage as the desired output voltage. The first compensator 202 generates as an output a first control voltage (V_{ctrl_v}) 210. The second compensator 204 receives as inputs the first control voltage (V_{ctrl_v}) 210 from the first compensator 202 and a second feedback voltage (V_{ioutFB}) 212. As shown in Figure 1, the buck-boost converter 100 may include a resistor 122 and a current sense amplifier 124, which may generate the second feedback voltage 212. The second compensator 204 generates as an output a second control voltage (Vctrl_pwm) 214.

The controller also includes a pulse width modulation (PWM) comparator 216 that generates a pulse width modulation signal 218. The pulse width modulation (PWM) comparator 216 receives as inputs the second control voltage (Vctrl_pwm) 214 and a sawtooth ramp signal 220. The saw tooth ramp signal 220 is provided by a sawtooth ramp signal generator 222. The pulse width modulation comparator 216 compares the second control voltage (Vctrl_pwm) 214 with the sawtooth ramp signal 220 and generates a pulse width modulation signal 218 that contains pulse width modulation duty cycle information. The non-overlap block 104 is operatively connected to the pulse width modulation comparator 216 and receives the pulse width modulation signal 218. The non-overlap block 104 generates deadtime and signals to control the plurality of drivers, which in turn control the plurality of switches as discussed above.

Figure 2 is a block diagram of one example of a buck-boost converter 300 of the present technology that includes a controller of the present technology 400. The buck-boost converter 300 may be the same as, or similar to, the buck boost converter 100 of Figure 1, but Figure 2 provides additional detail. As shown in Figure 2, the buck-boost converter 300 includes a DC-DC converter power stage 302, which includes a plurality of switches 304. In the illustrated examples, there are six switches shown, S₁, S₂, S₃, S₄, S₅, and S₆. However, it should be understood that any suitable number of switched may be included. The buck-boost converter 300 also includes a non-overlap block 320 that includes a plurality of drivers 306, the plurality of drivers 306 being operatively connected to the plurality of switches 304, where each driver of the plurality of drivers 306 controls the opening and closing of one of the plurality of switches 304. The plurality of drivers 306 are operatively connected to the controller 400 to receive control signals therefrom, and to the DC-DC converter power stage 302 so that control signals from the plurality of drivers 306 are provided thereto. The controller 400 is operatively connected to and controls operation of the plurality of drivers 306.

The DC-DC converter power stage 302 is operatively connected to and receives an input voltage (V_{IN}) 308 from a power source (106 in Figure 1). The input voltage 308 has a first voltage value. The input voltage 308 is regulated through the DC-DC converter power stage 302 by the controller 400 controlling the drivers 306 to generate an intermediate voltage 310. The buck-boost converter 300 also includes an inductor 312 that is operatively connected to the DC-DC converter power stage 302. The intermediate voltage 310 is passed to the inductor 312. The regulation by the controller 400 results in increasing or decreasing the input voltage 308 to generate a desired output voltage (Vₒᵤₜ) 314 having a second voltage value. The second voltage value of the output voltage 314 may be higher or lower than the first voltage value of the input voltage 308, depending upon the application. A load 318 is operatively connected to the voltage output node at which the output voltage 314 is provided, and the output voltage 314 is ultimately passed to the load 318. A load 318 is operatively connected to the inductor 312, and the output voltage 314 is ultimately passed to the load 318. However, the buck-boost converter may also include a capacitor 116 operatively connected to the inductor 312, and the output voltage 314 may be stored in the capacitor 316 prior to being passed to the load 318.

The controller 400 includes two compensators in series, a first compensator 402 and a second compensator 404. As shown, the first compensator 402 is a voltage loop delay line compensator, and the second compensator 404 is a current loop delay line compensator.

The first compensator 402 receives as inputs a first feedback voltage (V_{FB}) 406 and a reference voltage (V_{REF}) 408. The first feedback voltage 206 may be a scaled version of the output voltage 114. As shown in Figure 2, the buck-boost converter 300 may include a voltage divider 322, which may generate the first feedback voltage 406. The reference voltage 2408 is the same voltage as the desired output voltage. The first compensator 402 generates as an output a first control voltage (V_{ctrl_v}) 410. The second compensator 404 receives as inputs the first control voltage (V_{ctrl_v}) 410 from the first compensator 402 and a second feedback voltage (V_{ioutFB}) 412. As shown in Figure 2, the buck-boost converter 300 may include a resistor 324 and a current sense amplifier 326, which may sample the output voltage 314 and generate the second feedback voltage 412. The second compensator 404 generates as an output a second control voltage (Vctrl_pwm) 414.

The controller also includes a pulse width modulation (PWM) comparator 416 that generates a pulse width modulation signal 418. The pulse width modulation (PWM) comparator 416 receives as inputs the second control voltage (Vctrl_pwm) 414 and a sawtooth ramp signal 420. The saw tooth ramp signal 420 is provided by a sawtooth ramp signal generator 422. The pulse width modulation comparator 416 compares the second control voltage (Vctrl_pwm) 414 with the sawtooth ramp signal 420 and generates a pulse width modulation signal 418 that contains pulse width modulation duty cycle information. The non-overlap block 320 is operatively connected to the pulse width modulation comparator 416 and receives the pulse width modulation signal 418. The non-overlap block 320 generates deadtime and signals to control the plurality of drivers, which in turn control the plurality of switches as discussed above.

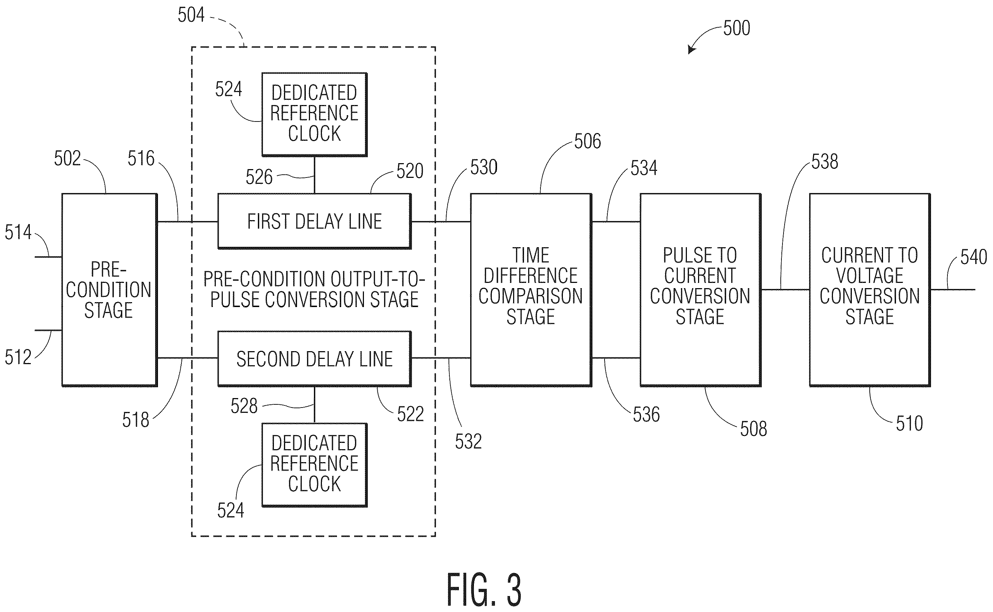

Referring to Figure 3, a block diagram of the stages of a delay line compensator 500 of the present technology is shown. The delay line compensator 500 may be used as a first compensator 202/402 or second compensator 204/404 in either of the buck-boost converters 100/300 described above with respect to Figures 1 and 2. The delay line compensator 500 includes a pre-condition stage 502, a pre-condition output-to-pulse conversion stage 504 operatively connected to the pre-condition stage 502, a time difference comparison stage 506 operatively connected to the pre-condition output-to-pulse conversion stage 504, a pulse to current conversion stage 508 operatively connected to the time difference comparison stage 506, and a current to voltage conversion stage 510 operatively connected to the pulse to current conversion stage 508.

The pre-condition stage 502 of the delay line compensator 500 receives as inputs a feedback voltage 512 and a comparison voltage 514. If the delay line compensator 500 is a first compensator 202/402 as shown in Figures 1 and 2, then the feedback voltage 512 may be a first feedback voltage 206/406 and the comparison voltage 514 may a reference voltage 208/408. If the delay line compensator 500 is a second compensator 204/404 as shown in Figures 1 and 2, then the feedback voltage 512 may be a second feedback voltage 212-412 and the comparison voltage may be the first control voltage 210/410 generated by the first compensator 202/402.

The pre-condition stage 502 may be a trans conductor, and may be configured to output values of either current or voltage. In examples where the delay line compensator 500 is a voltage compensator, the outputs of the pre-condition stage are voltages. In examples where the delay line compensator 500 is a current compensator, the outputs of the pre-condition stage are currents. The pre-condition stage 502 generates as outputs a positive output voltage error 516 and a negative output voltage error 518 based the difference between the inputs received by the pre-condition stage.

The pre-condition output-to-pulse conversion stage 504 includes a set of two delay lines, including a first delay line 520 and a second delay line 522. In examples where the delay line compensator 500 is a voltage compensator, the first delay line 520 and second delay line 522 are voltage delay lines. In examples where the delay line compensator 500 is a current compensator, the first delay line 520 and second delay line 522 are current delay lines. The pre-condition output-to-pulse conversion stage 504 also includes a dedicated reference clock 524, which provides a first clock signal 526 to the first delay line 520 and a second clock signal 528, which is the same as the first clock signal 526, to the second delay line 522. As used herein, the term "dedicated reference clock" means a reference clock that is dedicated to and unique to the pre-condition output-to-pulse conversion stage 504, although a single dedicated reference clock may be used for the pre-condition output-to-pulse conversion stage of each of the two delay line based compensators. The dedicated reference clock 524 is not used for any purpose other than its function in the pre-condition output-to-pulse conversion stage(s) 504. The dedicated reference clock 524 is distinct from other clocks that may be used within the system, such as a switching frequency clock that may be used in association with the pulse width modulation.

The first delay line 520 receives as inputs the positive output voltage error 516 and the first clock signal 526 and generates a first time signal 530 as an output. The second delay line 522 receives as inputs the negative output voltage error 518 and the second clock signal 528 and generates a second time signal 532 as an output.

The time difference comparison stage 506 may be a phase frequency detector or other suitable phase detector. The time difference comparison stage 506 receives as inputs the first time signal 530 and the second time signal 532, compares the first time signal 530 and the second time signal 532, and generates a phase difference signal (or delay signal), which may be either a lead signal 534 or a lag signal 536.

The pulse to current conversion stage 508 may be a charge pump. The pulse to current conversion stage 508 receives as an input the phase difference signal and generates a control current 538 as an output based on the phase difference signal.

The current to voltage conversion stage 510 may be a loop filter, and may act as an integrator. The current to voltage conversion stage 510, and receives as an input the control current 536 and generates a control voltage 540 as an output. In examples where the delay line compensator 500 is a first compensator 202/402 as shown in Figures 1 and 2, then the control voltage 540 may be a first control voltage 210/410. If the delay line compensator 500 is a second compensator 204/404 as shown in Figures 1 and 2, then the then the control voltage 540 may be a second control voltage 214/414.

Referring back to Figure 2, as discussed above, the first compensator 402 is a voltage loop delay line compensator and the second compensator 404 is a current loop delay line compensator.

The first compensator 402 includes a pre-condition stage that is a trans conductor 424 that is configured to output values as a voltage. The trans conductor 424 receives as inputs the first feedback voltage (V_{FB}) 406 and the reference voltage (V_{REF}) 408. The trans conductor 424 generates as outputs a positive output voltage error 426 and a negative output voltage error 428 based the difference between the inputs received by the trans conductor 424. The first compensator 402 also includes a pre-condition output-to-pulse conversion stage 430 that includes a set of two voltage delay lines, including a first voltage delay line 432 and a second voltage delay line 434. The pre-condition output-to-pulse conversion stage 430 also includes a reference clock 436, which provides a first clock signal 438 to the first voltage delay line 432 and a second clock signal 440, which is the same as the first clock signal 438, to the second voltage delay line 434. The first voltage delay line 432 receives as inputs the positive output voltage error 426 and the first clock signal 438 and generates a first time signal 442 as an output. The second delay line 434 receives as inputs the negative output voltage error 428 and the second clock signal 440 and generates a second time signal 444 as an output. The first compensator 402 also includes a time difference comparison stage that is shown as being a phase frequency detector 446, but alternatively be any other suitable phase detector. The phase frequency detector 446 receives as inputs the first time signal 442 and the second time signal 444, compares the first time signal 442 and the second time signal 444, and generates a phase difference signal (or delay signal), which may be either a lead signal 448 or a lag signal 450. The first compensator 402 also includes a pulse to current conversion stage that is a charge pump 452. The charge pump 452 receives as an input the phase difference signal and generates a control current 454 as an output based on the phase difference signal. The first compensator 402 also includes a current to voltage conversion stage that is a loop filter 456. The loop filter 456 receives as an input the control current 454 and generates the first control voltage 410 as an output.

The second compensator 404 includes a pre-condition stage that is a trans conductor 458 that is configured to output values as a current. The trans conductor 458 receives as inputs the second feedback voltage 412 and the first control voltage 410. The trans conductor 458 generates as outputs a positive output voltage error 460 and a negative output voltage error 462 based the difference between the inputs received by the trans conductor 458. The second compensator 404 also includes a pre-condition output-to-pulse conversion stage 464 that includes a set of two voltage delay lines, including a first voltage delay line 466 and a second voltage delay line 468. The pre-condition output-to-pulse conversion stage 464 also includes a reference clock 470, which provides a first clock signal 472 to the first voltage delay line 466 and a second clock signal 474, which is the same as the first clock signal 474, to the second voltage delay line 468. The first voltage delay line 466 receives as inputs the positive output voltage error 460 and the first clock signal 472 and generates a first time signal 476 as an output. The second delay line 468 receives as inputs the negative output voltage error 462 and the second clock signal 474 and generates a second time signal 478 as an output. The second compensator 404 also includes a time difference comparison stage that is shown as being a phase frequency detector 480, but alternatively be any other suitable phase detector. The phase frequency detector 480 receives as inputs the first time signal 476 and the second time signal 478, compares the first time signal 476 and the second time signal 478, and generates a phase difference signal (or delay signal), which may be either a lead signal 482 or a lag signal 484. The second compensator 404 also includes a pulse to current conversion stage that is a charge pump 486. The charge pump 486 receives as an input the phase difference signal and generates a control current 488 as an output based on the phase difference signal. The second compensator 404 also includes a current to voltage conversion stage that is a loop filter 490. The loop filter 490 receives as an input the control current 488 and generates the second control voltage 414 as an output.

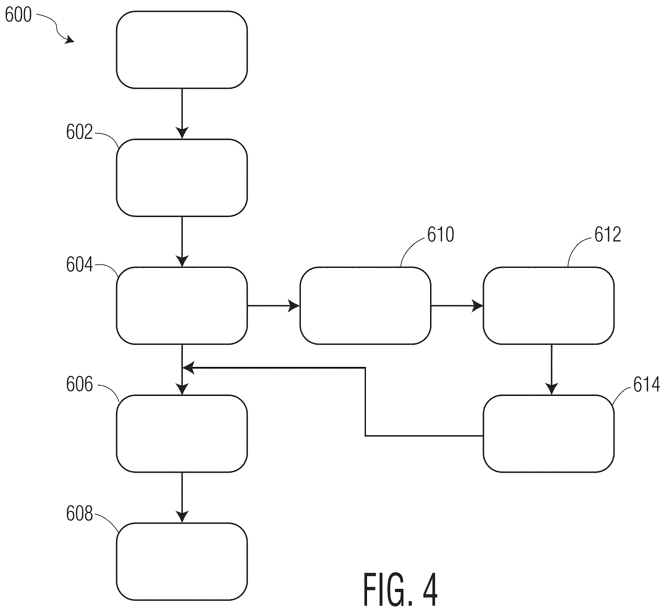

Figure 4 illustrates a block diagram of one method 600 of controlling a buck-boost converter of the present technology. The method 600 may be used with respect to either the first buck-boost converter 100 or second buck-boost converter 300 as described above, and may therefore include any of the components, features, and functions described above. As shown in Figure 6, the method 600 of controlling a buck-boost converter may start at step 602, which includes receiving by a DC-DC converter power stage an input voltage from a power source. The input voltage has a first voltage value. The method 600 may continue to step 604, which includes operating a controller to regulate the input voltage through the DC-DC converter power stage by controlling the plurality of drivers to generate an intermediate voltage. The method 600 ma continue to step 606, which includes passing the intermediate voltage from the DC-DC converter power stage to the inductor. The method 600 may continue to step 608, which includes outputting an output voltage at a second voltage value from the inductor.

The method 600 may include additional steps that are directed to sub-steps of step 604 of operating the controller. As shown, operating the controller includes step 610, which includes generating a first control voltage as an output of a first compensator, wherein the first compensator receives as inputs a first feedback voltage and a reference voltage. Operating the controller also includes step 612, which includes generating a second control voltage as an output of a second compensator. The second compensator is operatively connected to the first compensator in series. The second compensator receives as inputs the first control voltage and a second feedback voltage. Operating the controller further includes step 614, which includes generating a pulse width modulation signal as an output of a pulse width modulation comparator. The pulse width modulation comparator is operatively connected to the second compensator, and receives as inputs the second control voltage and a sawtooth ramp signal.

In at least one example of a method 600, the step 610 of generating a first control voltage as an output of a first compensator and the step 612 of generating a second control voltage as an output of a second compensator may each include one or more additional sub-steps. In such an example, the additional sub-steps may include receiving by a pre-condition stage of inputs including a feedback voltage and a comparison voltage, and generating by the pre-condition stage a positive output voltage error and a negative output voltage error as outputs. The additional sub-steps may also include receiving as inputs the positive output voltage error and the negative output voltage error by a pre-condition output-to-pulse conversion stage operatively connected to the pre-condition stage, wherein the pre-condition output-to-pulse conversion stage includes a first delay line, a second delay line, and a dedicated reference clock, and generating by the pre-condition output-to-pulse conversion stage a first time signal from the first delay line based on the positive output voltage error and a first clock signal from the dedicated reference clock, and a second time signal from the second delay line based on the negative output voltage error and a second clock signal from the dedicated reference clock. The additional sub-steps may also include receiving as inputs, by a time difference comparison stage operatively connected to the pre-condition output-to-pulse conversion stage, the first time signal and the second time signal, and generating by the time difference comparison stage a phase difference signal. The additional sub-steps may also include receiving as an input the phase difference signal by a pulse to current conversion stage operatively connected to the time difference comparison stage, and generating by the pulse to current conversion stage a control current as an output. The additional sub-steps may further include receiving the control current as an input by a current to voltage conversion stage operatively connected to the pulse to current conversion stage, and generating by the current to voltage conversion stage a control voltage as an output.

Notwithstanding the above description, the present disclosure is intended to encompass numerous embodiments including those disclosed herein as well as a variety of alternate embodiments.

One or more of the embodiments encompassed herein can be advantageous in any of a variety of respects. For example, the systems and methods described herein may provide buck-boost converters designed for wide Vin/Vout operating ranges. Additionally, or alternatively, the systems and methods described herein may provide buck-boost converters that are capable of achieving high efficiencies (i.e., < 1MHz of switching frequency). Further, the systems and methods described herein may be implemented entirely on chip, which may completely remove the need for external compensation networks to stabilize the control loop

While the principles of the invention have been described above in connection with specific apparatus, it is to be clearly understood that this description is made only by way of example and not as a limitation on the scope of the invention. It is specifically intended that the present invention not be limited to the embodiments and illustrations contained herein, but include modified forms of those embodiments including portions of the embodiments and combinations of elements of different embodiments as come within the scope of the following claims.

## Claims

1. A DC-DC converter comprising:
a DC-DC converter power stage that includes a plurality of switches and receives an input voltage from a power source, the input voltage having a first voltage value;
a plurality of drivers operatively connected to plurality of switches that control opening and closing of the plurality of switches;
a controller that is operatively connected to and controls operation of the plurality of drivers to regulate the input voltage through the DC-DC converter power stage and generate an intermediate voltage; and
an inductor operatively connected to the DC-DC converter power stage that receives the intermediate voltage and outputs an output voltage, the output voltage having a second voltage value;
wherein the controller includes:
a first compensator that receives as inputs a first feedback voltage and a reference voltage and generates a first control voltage;
a second compensator operatively connected to the first compensation in series, wherein the second compensator receives as inputs the first control voltage from the first compensator and a second feedback voltage and generates a second control voltage;
a pulse width modulation comparator that receives as inputs the second control voltage and a sawtooth ramp signal and generates a pulse width modulation signal; and
a non-overlap block operatively connected to the pulse width modulation comparator that receives the pulse width modulation signal and generates deadtime and signals to control the plurality of drivers.

2. The DC-DC converter of claim 1, wherein the DC-DC converter is a buck-boost converter, and wherein the first compensator and second compensator are each a delay line based compensator.

3. The DC-DC converter of claim 2, wherein the first compensator is a voltage loop delay line compensator and the second compensator is a current loop delay line compensator.

4. The DC-DC converter of claim 2 or 3, wherein each of the delay line based compensators includes:
a pre-condition stage that receives as inputs a feedback voltage and a comparison voltage and generates as outputs a positive output voltage error and a negative output voltage error;
a pre-condition output-to-pulse conversion stage operatively connected to the pre-condition stage, wherein the pre-condition output-to-pulse conversion stage includes a dedicated reference clock, a first delay line and a second delay line, and generates a first time signal from the first delay line based on the positive output voltage error and a first clock signal from the dedicated reference clock, and a second time signal from the second delay line based on the negative output voltage error and a second clock signal from the dedicated reference clock;
a time difference comparison stage operatively connected to the pre-condition output-to-pulse conversion stage, wherein the time difference comparison stage receives as inputs the first time signal and the second time signal, and generates a phase difference signal;
a pulse to current conversion stage operatively connected to the time difference comparison stage, wherein the pulse to current conversion stage receives as an input the phase difference signal and generates a control current as an output; and
a current to voltage conversion stage operatively connected to the pulse to current conversion stage, wherein the current to voltage conversion stage receives as an input the control current and generates a control voltage as an output.

5. The DC-DC converter of claim 4, wherein the pre-condition stage is a trans conductor.

6. The DC-DC converter of claim 4 or 5, wherein the time difference comparison stage is a phase frequency detector.

7. The DC-DC converter of any one of claims 4 to 6, wherein the pulse to current conversion stage is a charge pump.

8. The DC-DC converter of any one of claims 4 to 7, wherein the current to voltage conversion stage is a loop filter.

9. A method of controlling a buck-boost converter, the method comprising:
receiving by a DC-DC converter power stage an input voltage from a power source, the input voltage having a first voltage value;
operating a controller to regulate the input voltage through the DC-DC converter power stage by controlling a plurality of drivers to generate an intermediate voltage;
passing the intermediate voltage from the DC-DC converter power stage to an inductor; and
outputting an output voltage at a second voltage value from the inductor;
wherein operating the controller includes:
generating a first control voltage as an output of a first compensator, wherein the first compensator receives as inputs a first feedback voltage and a reference voltage;
generating a second control voltage as an output of a second compensator, the second compensator being operatively connected to the first compensator in series, wherein the second compensator receives as inputs the first control voltage and a second feedback voltage; and
generating a pulse width modulation signal as an output of a pulse width modulation comparator, the pulse width modulation comparator being operatively connected to the second compensator, wherein the pulse width modulation comparator receives as inputs the second control voltage and a sawtooth ramp signal.

10. The method of claim 9, wherein generating a first control voltage as an output of a first compensator includes:
receiving by a pre-condition stage of inputs including a feedback voltage and a comparison voltage, and generating by the pre-condition stage a positive output voltage error and a negative output voltage error as outputs;
receiving as inputs the positive output voltage error and the negative output voltage error by a pre-condition output-to-pulse conversion stage operatively connected to the pre-condition stage, wherein the pre-condition output-to-pulse conversion stage includes a first delay line, a second delay line, and a dedicated reference clock, and generating by the pre-condition output-to-pulse conversion stage a first time signal from the first delay line based on the positive output voltage error and a first clock signal from the dedicated reference clock, and a second time signal from the second delay line based on the negative output voltage error and a second clock signal from the dedicated reference clock;
receiving as inputs, by a time difference comparison stage operatively connected to the pre-condition output-to-pulse conversion stage, the first time signal and the second time signal, and generating by the time difference comparison stage a phase difference signal;
receiving as an input the phase difference signal by a pulse to current conversion stage operatively connected to the time difference comparison stage, and generating by the pulse to current conversion stage a control current as an output; and
receiving the control current as an input by a current to voltage conversion stage operatively connected to the pulse to current conversion stage, and generating by the current to voltage conversion stage a control voltage as an output.

11. The method of claim 9 or 10, wherein generating a second control voltage as an output of a second compensator includes:
receiving by a pre-condition stage of inputs including a feedback voltage and a comparison voltage, and generating by the pre-condition stage a positive output voltage error and a negative output voltage error as outputs;
receiving as inputs the positive output voltage error and the negative output voltage error by a pre-condition output-to-pulse conversion stage operatively connected to the pre-condition stage, wherein the pre-condition output-to-pulse conversion stage includes a first delay line, a second delay line, and a dedicated reference clock, and generating by the pre-condition output-to-pulse conversion stage a first time signal from the first delay line based on the positive output voltage error and a first clock signal from the dedicated reference clock, and a second time signal from the second delay line based on the negative output voltage error and a second clock signal from the dedicated reference clock;
receiving as inputs, by a time difference comparison stage operatively connected to the pre-condition output-to-pulse conversion stage, the first time signal and the second time signal, and generating by the time difference comparison stage a phase difference signal;
receiving as an input the phase difference signal by a pulse to current conversion stage operatively connected to the time difference comparison stage, and generating by the pulse to current conversion stage a control current as an output; and
receiving the control current as an input by a current to voltage conversion stage operatively connected to the pulse to current conversion stage, and generating by the current to voltage conversion stage a control voltage as an output.
